# EUROPÄISCHE PATENTANMELDUNG

(11) **EP 4 333 362 A1**
(43) Veröffentlichungstag der Anmeldung: **06.03.2024**
(21) Anmeldenummer: 22193110.8
(22) Anmeldetag: 31.08.2022
(51) Int. Cl.: H04L 9/32, H04L 9/40, G05B 19/042

(54) **LEITSYSTEM FÜR EINE TECHNISCHE ANLAGE UND COMPUTER-IMPLEMENTIERTES VERFAHREN ZUR AUSSERBETRIEBNAHME EINER ANLAGENKOMPONENTE**

(71) Anmelder: Siemens Aktiengesellschaft, 80333 München (DE)
(72) Erfinder: Palmin, Anna, 76187 Karlsruhe (DE)
(74) Vertreter: Siemens Patent Attorneys

(57) **Zusammenfassung**

Es wird ein Leitsystem für eine technische Anlage, insbesondere eine Automatisierungsanlage, welches eine Mehrzahl von Anlagenkomponenten aufweist, vorgeschlagen. Das Leitsystem weist auf:
eine erste Selektions-Einheit zum Auswählen zumindest einer außer zu Betrieb nehmenden Anlagenkomponente aus der Mehrzahl von Anlagenkomponenten, und
eine Auslöse-Einheit zum Auslösen einer Außerbetriebnahme der zumindest einen ausgewählten Anlagenkomponente, wobei die Auslöse-Einheit aufweist:
eine zweite Selektions-Einheit zum Auswählen, aus allen Zertifikaten der zumindest einen ausgewählten Anlagenkomponente, ausschließlich einer Anzahl N1 von zu revozierenden spezifischen Zertifikaten, mit N1 ≥ 1,
eine Revokations-Einheit zum Revozieren der Anzahl N1 von ausgewählten Zertifikaten zum Erhalten einer Anzahl N2 von revozierten Zertifikaten, mit N1 = N2, und
eine Lösch-Einheit zum Löschen der Anzahl N2 von revozierten Zertifikaten von der zumindest einen ausgewählten Anlagenkomponente zum Erhalten einer außer Betrieb genommenen Anlagenkomponente.

## Beschreibung

Die vorliegende Erfindung betrifft ein Leitsystem für eine technische Anlage sowie ein computer-implementiertes Verfahren und ein Computerprogrammprodukt zur Außerbetriebnahme einer Anlagenkomponente.

In einer ersten Anlage (beispielsweise einer Automatisierungsanlage) kommt es oft vor, dass eine Anlagenkomponente (z.B. ein Gerät oder ein Modul) aus der ersten Anlage ausgebaut wird und von einem Betreiber der ersten Anlage an einen anderen Betreiber einer zweiten Anlage verkauft oder verliehen wird. Dabei wird die ausgebaute Anlagenkomponente in der zweiten Anlage bereitgestellt (provisioniert), wodurch diese an die zweite Anlage gebunden und dazu befähigt wird, gemäß den im Kontext der zweiten Anlage konfigurierten Kommunikationsbeziehungen mit den anderen Anlagenkomponenten der zweiten Anlage unter Verwendung der entsprechenden in der zweiten Anlage ausgerollten Zertifikaten sicher zu kommunizieren.

Die für die ausgebaute Anlagenkomponente in der ersten Anlage ausgestellten Zertifikate bleiben jedoch üblicherweise weiterhin gültig und in einem Zertifikatsspeicher der ausgebauten Anlagenkomponente gespeichert. Da die ausgestellten Zertifikate im Kontext der zweiten Anlage nicht benötigt werden, belegen sie einerseits unnötigerweise Speicherplatz in dem Zertifikatsspeicher. Andererseits können die ausgestellten Zertifikate in beiden Anlagen missbraucht werden, z.B. anhand folgender Szenarien:
Die aus der ersten Anlage ausgebaute Anlagenkomponente könnte (z.B. vom Personal der ersten Anlage) vorsätzlich oder versehentlich wieder in die erste Anlage "hineingeschmuggelt" werden und sich unter Verwendung ihrer weiterhin gültigen anlagenspezifischen LDevID-Generic-Zertifikate authentifizieren oder sich an der Kommunikation beteiligen, obwohl die ausgebaute Anlagenkomponente offiziell verkauft oder verliehen wurde.

Ferner können die ausgestellten Zertifikate von einer anderen "bösartigen" Anlagenkomponente, welche in einem Geräteinventar der ersten Anlage eingerichtet ist, oder einem Benutzer, unbemerkt "missbraucht" werden, denn diese gelten im Kontext der ersten Anlage weiterhin als gültig.

Sofern die ausgebaute Anlagenkomponente im Kontext der zweiten Anlage nicht mit einer anderen Anlagenkomponente, welche als ein Kommunikationspartner in der ersten Anlage agiert hat und welche ebenfalls an den Betreiber der zweiten Anlage verkauft oder verliehen wurde, kommunizieren soll, so kann diese Kommunikation zertifikatsbasiert nicht unterbunden werden, da den beiden Anlagenkomponenten in der zweiten Anlage die jeweiligen entsprechenden weiterhin gültigen applikationsspezifischen Zertifikate vorliegen.

Zum Unterbinden obiger missbräuchlicher Szenarien und zur Freisetzung von Speicherplatz in dem Zertifikatsspeicher sind herkömmlicherweise mehrere Ansätze zum teilweisen außer Betrieb nehmen von ausgebauten Anlagenkomponenten bekannt:
Ein erster Ansatz ist, die ausgebaute Anlagenkomponente auf Werkseinstellungen zurückzusetzen. Jedoch werden dabei die von der Anlagenkomponente verwendete Zertifikate nicht oder nur teilweise berücksichtigt und somit unabhängig vom Zertifikatstyp und Einsatzzweck gelöscht. Dies erhöht die Fehleranfälligkeit beim Löschen der Zertifikate.

Ein zweiter Ansatz ist die Anforderung "CR 4.2 - Information Persistence" des Industriestandards IEC 62443, welche vorschlägt, alle betreiberspezifischen Daten (u.a. abgespeicherte ausgestellte Zertifikate und kryptographische Schlüssel) von der ausgebauten Anlagenkomponente zu löschen.

Dieser zweite Ansatz lässt sich jedoch nicht eins zu eins auf die im Kontext der ersten oder zweiten Anlage verwendeten speziellen komponentenspezifischen (anlagenspezifischen) Zertifikate (LDevID-Generic-Zertifikate) und applikationsspezifischen Zertifikate (LDevID-App-Zertifikate) übertragen, denn trotz des Löschens dieser Zertifikate von den ausgebauten Anlagenkomponenten behalten diese weiterhin ihre Gültigkeit. Somit sind derartige gelöschte Zertifikate oder genauer gesagt der in diesem Zertifikat mitaufgeführte öffentliche Schlüssel weiterhin einerseits an den in der ausgebauten Anlagenkomponente gespeicherten geheimen Schlüssel und andererseits an den Namen und die Identität der ausgebauten Anlagenkomponente sowie an den Aussteller des jeweiligen Zertifikats, also die jeweilige Zertifizierungsstelle, eineindeutig gebunden.

Beim Löschen gemäß dem zweiten Ansatz ist zudem zu berücksichtigen, dass ein Löschen von ausgewählten kryptographischen Schlüsseln aus dem Zertifikatsspeicher der ausgebauten Anlagenkomponente, wie einem Trusted Platform Module oder einem anderen Hardware Secure Element, eine große technische Herausforderung darstellt, u.a. aufgrund des Risikos, dass dabei ein anderer Schlüssel, wie ein beim Hersteller generierter Schlüssel (IDevID-Schlüssel), der weiterhin benötigt wird, mit gelöscht wird.

Auch kann beim Löschvorgang gemäß dem zweiten Ansatz nicht sichergestellt werden, dass die zu löschenden ausgestellten LDevID-Zertifikate nicht mit den IDevID-Zertifikaten verwechselt werden. Solche eine Verwechslung ist deshalb kritisch, da ein IDevID-Zertifikat einen wichtigen Bestandteil der initialen sicheren Identität nach der IEEE 802 1AR darstellt und stets vorhanden und gültig sein soll, u.a. um eine sichere Provisionierung der ausgebauten Anlagenkomponente in einer neuen Einsatzumgebung, wie der zweiten Anlage, zu ermöglichen.

Darüber hinaus werden die Vorschläge gemäß dem ersten und zweiten Ansatz zusätzlich dadurch erschwert, dass wenn beispielsweise im Rahmen eines Umbaus gleichzeitig mehrere Anlagenkomponenten außer Betrieb genommen und an einen anderen Betreiber verkauft oder verliehen werden sollen, sich die Fehleranfälligkeit im Zuge des gleichzeitigen Ausbaus der mehreren Anlagenkomponenten erhöht.

Vor diesem Hintergrund besteht eine Aufgabe der vorliegenden Erfindung darin, eine Außerbetriebnahme einer Anlagenkomponente zu verbessern.

Gemäß einem ersten Aspekt wird ein Leitsystem für eine technische Anlage, insbesondere eine Automatisierungsanlage, welches eine Mehrzahl von Anlagenkomponenten aufweist, vorgeschlagen. Das Leitsystem weist auf:
eine erste Selektions-Einheit zum Auswählen zumindest einer außer zu Betrieb nehmenden Anlagenkomponente aus der Mehrzahl von Anlagenkomponenten, und
eine Auslöse-Einheit zum Auslösen einer Außerbetriebnahme der zumindest einen ausgewählten Anlagenkomponente, wobei die Auslöse-Einheit aufweist:
   eine zweite Selektions-Einheit zum Auswählen, aus allen Zertifikaten der zumindest einen ausgewählten Anlagenkomponente, ausschließlich einer Anzahl N1 von zu revozierenden spezifischen Zertifikaten, wobei die zweite Selektions-Einheit dazu eingerichtet ist, ein Zertifikat der zumindest einen ausgewählten Anlagenkomponente als ein zu revozierendes spezifisches Zertifikat in Abhängigkeit von zumindest einem Benutzerparameter des Zertifikats, zumindest einem Anlagenparameter des Zertifikats und/oder zumindest einem Zertifikatstyp des Zertifikats festzulegen, mit N1 ≥ 1,
   eine Revokations-Einheit zum Revozieren der Anzahl N1 von ausgewählten Zertifikaten zum Erhalten einer Anzahl N2 von revozierten Zertifikaten, mit N1 = N2, und
   eine Lösch-Einheit zum Löschen der Anzahl N2 von revozierten Zertifikaten von der zumindest einen ausgewählten Anlagenkomponente zum Erhalten einer außer Betrieb genommenen Anlagenkomponente.

Das Leitsystem gemäß dem ersten Aspekt hat den technischen Effekt, dass ausschließlich ausgewählte zu revozierende Zertifikate, das bedeutet, ausschließlich komponentenspezifische Zertifikate und/oder applikationsspezifische Zertifikate, der zumindest einen ausgewählten Anlagenkomponente nachweisbar revoziert werden und anschließend von der ausgewählten Anlagenkomponente gelöscht werden. Nach dem Löschen der revozierten Zertifikate ist die ausgewählte Anlagenkomponente dann eine außer Betrieb genommene Anlagenkomponente und kann in einer anderen technischen Anlage sicher verwendet werden. Zusätzlich werden Datensätze hinsichtlich der revozierten Zertifikate sowie der außer Betrieb genommenen Anlagenkomponente aufgrund der informationstechnischen Anforderung an die Rückverfolgbarkeit archiviert. Dadurch wird eine automatisierte, rückverfolgbare und nichtabstreitbare Außerbetriebnahme (Deprovisionierung) der zumindest einen ausgewählten Anlagenkomponente durchgeführt. Hieraus resultieren die nachfolgenden Vorteile:
Die mit dem Zurücksetzen der Anlagenkomponente auf Werkseinstellungen verbundene Fehleranfälligkeit wird eliminiert, da die revozierten Zertifikate, insbesondere die jeweiligen geheimen Schlüssel, vollständig physisch von der ausgewählten Anlagenkomponente gelöscht werden. Zudem wird sichergestellt, dass ausschließlich zu revozierende Zertifikate gelöscht werden. Dadurch wird in vorteilhafter Weise verhindert, dass weiterhin benötigte Zertifikate, wie z.B. herstellerspezifische Zertifikate und deren zugehörige kryptographische Schlüssel, nicht versehentlich oder aufgrund einer Verwechslung unwiderruflich gelöscht werden.

Zusätzlich wird ein vorsätzlicher oder versehentlicher Missbrauch der Anlagenkomponente beim Einsatz dieser in einer anderen technischen Anlage verhindert, da in der außer Betrieb genommenen Anlagenkomponente alle revozierten Zertifikate unwiderruflich gelöscht wurden. Dies erhöht die Manipulationssicherheit der technischen Anlage sowie des Leitsystems.

Darüber hinaus wird mittels des obigen Leitsystems in vorteilhafter Weise eine selektive Außerbetriebnahme der zumindest einen ausgewählten Anlagenkomponente in Abhängigkeit zumindest eines Benutzerparameters des Zertifikats, zumindest einem Anlagenparameter des Zertifikats und/oder zumindest einem Zertifikatstyp des Zertifikats durchgeführt. Im Zuge dessen wird zudem in vorteilhafter Weise eine Selektion, eine Revokation und ein Löschen zumindest eines zu revozierenden Zertifikats der zumindest einen ausgewählten Anlagenkomponente in Abhängigkeit eines Benutzers (Benutzerparameter), einer Anlage (Anlagenparameter) und/oder eines Zertifikattyps durchgeführt. Wenn die zumindest eine ausgewählte Anlagenkomponente beispielsweise in einer Cloud betrieben wird und gleichzeitig von mehreren Benutzern (z.B. Benutzer A, B und C) benutzt wird, kann durch das Leitsystem eine selektive Außerbetriebnahme ermöglicht werden. Dies bedeutet, dass die für einen Benutzer A ausgestellten komponentenspezifischen und/oder applikationsspezifischen Zertifikate revoziert und von der ausgewählten Anlagenkomponente gelöscht werden, während die für die Benutzer B und C ausgestellten komponentenspezifischen und/oder applikationsspezifischen Zertifikate weiterhin gültig bleiben und von der ausgewählten Anlagenkomponente für die Kommunikation mit deren Kommunikationspartnern im Kontext der Benutzer B und C weiterhin genutzt werden können.

Durch die obigen beschriebenen Maßnahmen und Vorteile erhöht sich die Kommunikationssicherheit des Leitsystems während des Betriebs, während sich das Auftreten von Störungen verringert, wodurch damit das Schutzziel der optimalen Verfügbarkeit der Informationssicherheit erfüllt wird. Auch leistet das Leitsystem, vorzugsweise durch seinen Einsatz in einer Public-Key-Infrastruktur (PKI), durch die Wechselwirkungen seiner jeweiligen Einheiten einen Beitrag zur Erfüllung der Anforderungen der IEC 62443 (Abschnitt 5.10 SR, 1.8. PKI-Zertifikate). Außerdem erfüllt das Leitsystem die Anforderungen im Zero Trust-Kontext, nach welchem gefordert wird, dass die Anlagenkomponenten des Leitsystems eine sichere Identität aufweisen sollen. Nachdem das Leitsystem beschreibt, wie eine Identität, beispielsweise eine Anlagenkomponente, bei der Außerbetriebnahme ungültig gemacht wird, also deren komponenten- und/oder applikationsspezifische Zertifikate revoziert und gelöscht werden, sind die Anforderungen an Zero-Trust erfüllt.

Unter einem Leitsystem wird vorliegend ein computergestütztes technisches System verstanden, das Funktionalitäten zum Anzeigen, Steuern und Leiten einer technischen Anlage aufweist. Das Leitsystem kann sich insbesondere über eine Cloud erstrecken, die mit mehreren technischen Anlagen verbunden ist. Hierbei kann die zumindest eine ausgewählte Anlagenkomponente auch in der Cloud angeordnet sein. Die Mehrzahl von Anlagenkomponenten kann sich auch über mehrere technische Anlagen verteilen.

Bei der technischen Anlage kann es sich um eine Anlage aus der Prozessindustrie oder um eine Automatisierungsanlage, wie beispielsweise eine chemische, pharmazeutische, petrochemische Anlage oder eine Anlage aus der Nahrungs- und Genussmittelindustrie handeln. Hiermit umfasst sind auch jegliche Anlagen aus der Fertigungs- und Produktionsindustrie und Werke, in denen z.B. Autos oder Güter aller Art produziert werden. Ferner kann die technische Anlage auch als eine Energieerzeugungsanlage, wie beispielsweise ein Windrad, eine Solaranlage oder ein Kraftwerk, ausgebildet sein.

Die erste Selektions-Einheit ist dazu eingerichtet, zumindest eine außer zu Betrieb nehmende Anlagenkomponente, vorzugsweise in Abhängigkeit von vordefinierten Regeln oder dynamischen Regeln, welche insbesondere in Abhängigkeit eines Benutzers definiert werden, automatisiert auszuwählen. Ein Beispiel für eine vordefinierte Regel ist: "Bitte alle Anlagenkomponenten einer Anlage X außer Betrieb nehmen". Beispiele für dynamische Regeln sind, dass falls eine Zertifizierungsstelle, welche Zertifikate für eine bestimmte Anlagenkomponente ausgestellt hat, kompromittiert wurde, die bestimmte Anlagenkomponente außer Betrieb zu nehmen, oder dass falls entschieden wird, ein Modul einer technischen Anlage auszubauen, welches mehrere Anlagenkomponenten aufweist, die mehreren Anlagenkomponenten auszuwählen und außer Betrieb zu nehmen. Auch kann eine dynamische Regel beispielweise mittels einer künstlichen Intelligenz, insbesondere mittels maschinellem Lernen, definiert und dynamisch angepasst werden. Hierbei kann eine künstliche Intelligenz dahingehend trainiert oder angepasst werden, welche Anlagenkomponenten unter welchen Bedingungen (Regeln oder Umwelteinflüsse) außer Betrieb genommen werden sollen.

Eine außer zu Betrieb nehmende Anlagenkomponente ist insbesondere eine in einer technischen Anlage eingebaute Anlagenkomponente, welche z.B. zum Zwecke eines Verkaufs oder eines Verleihens ausgebaut oder aus der technischen Anlage entfernt werden soll. Die Außerbetriebnahme kann auch als eine Deprovisionierung bezeichnet werden.

Die Auslöse-Einheit ist dazu eingerichtet, die Außerbetriebnahme, vorzugsweise bei einem Auftreten eines bestimmten Ereignisses, welches in Abhängigkeit von vordefinierten Regeln oder dynamischen Regeln definiert wird, welche insbesondere in Abhängigkeit des Benutzers definiert werden, automatisiert auszulösen. Das bestimmte Ereignis ist beispielsweise eine Erkennung durch das Leitsystem, dass die erste Selektions-Einheit die zumindest eine außer zu Betrieb nehmende Anlagenkomponente ausgewählt hat.

Die zweite Selektions-Einheit ist vorzugsweise zeitlich vor dem Auswählen dazu eingerichtet, automatisch durch weitere vordefinierten Regeln oder beispielsweise durch einen Benutzer dynamisch definierte Regeln, aus allen der im Geräteinventar abgespeicherten Zertifikate, die zu revozierenden spezifischen Zertifikate auszuwählen. Ein Beispiel für eine weitere vordefinierte Regel ist: "Bitte alle zu revozierenden spezifischen Zertifikate in Zusammenhang mit der ausgewählten Anlagenkomponente und mit einer Anlage X auswählen". Anhand dieser aus dem Geräteinventar ausgewählten zu revozierenden spezifischen Zertifikate ist die zweite Selektions-Einheit dann dazu eingerichtet, ausschließlich die Anzahl N1 von zu revozierenden spezifischen Zertifikaten, insbesondere aus einem Zertifikatsspeicher der zumindest einen ausgewählten Anlagenkomponente, auszuwählen. Die weiteren vordefinierten Regeln sind beispielsweise in einem Quellcode für die zweite Selektions-Einheit hinterlegt.

Ein Zertifikat ist einem Zertifikatstyp zugeordnet. Der Zertifikatstyp ist zumindest herstellerspezifisch, komponentenspezifisch (anlagenspezifisch) oder applikationsspezifisch ausgebildet. Ein herstellerspezifisches Zertifikat ist beispielsweise ein IDevID-Zertifikat (engl. "Initial Device Identifier-Certificate"), ein komponentenspezifisches Zertifikat ist beispielsweise ein LDevID-Generic-Zertifikat (engl. "Locally Significant Device Identifier-Generic-Certificate") und ein applikationsspezifisches Zertifikat ist beispielsweise ein LDevID-App-Zertifikat.

Ein LDevID-Generic-Zertifikat wird insbesondere auf Basis zumindest eines herstellerspezifischen IDevID-Zertifikats beantragt und bindet die jeweilige Anlagenkomponente an die jeweilige (benutzerspezifische) technische Anlage.

Ein LDevID-App-Zertifikat wird vorzugsweise auf Basis zumindest eines komponentenspezifischen LDevID-Generic-Zertifikats beantragt und wird von den jeweiligen Anlagenkomponenten insbesondere dazu verwendet, eine sichere Kommunikation zwischen den jeweiligen Anlagenkomponenten mittels Kommunikationsprotokollen, wie OPC UA (engl. "OPC Unified Architecture") oder TLS (engl. "Transport Layer Security"), aufzubauen und zu realisieren.

Die Anzahl N1 von zu revozierenden Zertifikaten weist ausschließlich Zertifikate mit dem Zertifikatstyp komponentenspezifisch und/oder applikationsspezifisch auf. Die Anzahl N1 von zu revozierenden Zertifikaten weist jedoch keine Zertifikate mit dem Zertifikatstyp herstellerspezifisch auf.

Ein Benutzerparameter bezeichnet einen oder gibt Rückschluss auf einen bestimmten Benutzer, wie einen Kunden oder einen Betreiber der technischen Anlage. Es ist insbesondere auch möglich, dass mehrere bestimmte Benutzer, beispielsweise Benutzer A, B und C, auf eine Anlagenkomponente zugreifen können.

Ein Anlagenparameter bezeichnet eine oder gibt Rückschluss auf eine bestimmte technische Anlage. Beispielsweise weist das Leitsystem mehrere technische Anlagen, beispielsweise die bestimmten technischen Anlagen X, Y und Z, auf.

Die Revokations-Einheit ist dazu eingerichtet, die Anzahl N1 von ausgewählten Zertifikaten automatisiert, insbesondere anhand von vordefinierten Regeln oder dynamischen Regeln, welche vorzugsweise in Abhängigkeit eines Benutzers definiert werden, zu revozieren. Ein Beispiel für eine vordefinierte Regel ist: "Bitte alle ausgewählten Zertifikate in Zusammenhang mit der ausgewählten Anlagenkomponente und mit der Anlage X revozieren".

Unter dem Begriff "Revozieren" wird insbesondere ein Vorgang verstanden, welcher ein ausgewähltes Zertifikat eines Zertifikattyps durch das Revozieren für eine bestimmte technische Anlage und/oder einen bestimmten Benutzer ungültig macht, widerruft oder sperrt.

Die Lösch-Einheit ist dazu eingerichtet, die Anzahl N2 von revozierten Zertifikaten automatisiert, insbesondere anhand von vordefinierten Regeln oder dynamischen Regeln, welche vorzugsweise in Abhängigkeit eines Benutzers definiert werden, zu löschen. Ein Beispiel für eine vordefinierte Regel ist das Auslösen der Lösch-Einheit, wenn die Lösch-Einheit erkennt, dass ein bestimmter Status der Anzahl N1 von zu revozierenden Zertifikaten sich auf den bestimmten Status "revoziert" geändert hat. Ein weiteres Beispiel für eine vordefinierte Regel ist: "Bitte alle revozierten Zertifikate in Zusammenhang mit der ausgewählten Anlagenkomponente und mit der Anlage X löschen".

Insbesondere wird eine erfolgreich außer Betrieb genommene Anlagenkomponente erhalten, wenn alle Zertifikate der Anzahl N2 von revozierten Zertifikaten von der ausgewählten Anlagenkomponente lokal gelöscht wurden.

Gemäß einer Ausführungsform weist das Leitsystem eine Speicher-Einheit zum Abspeichern eines die außer Betrieb genommenen Anlagenkomponente bezeichnenden Datensatzes, und eine Anzeige, welche mit der Speicher-Einheit verbunden ist und dazu eingerichtet ist, zumindest den abgespeicherten Datensatz anzuzeigen, auf.

Diese Ausführungsform weist den Vorteil auf, dass der abgespeicherte oder archivierte Datensatz, welcher Log-Einträge von zumindest der außer Betrieb genommenen Anlagenkomponente und von der in dem Kontext der außer Betrieb genommenen Anlagenkomponente gelöschten revozierten Anzahl N2 von Zertifikaten aufweist, dazu verwendet wird, um die informationstechnische Anforderung der Rückverfolgbarkeit von Vorgängen der technischen Anlage zu erfüllen. Durch den abgespeicherten Datensatz sind die Vorgänge und Änderungen in der technischen Anlage und der jeweiligen Anlagenkomponente rückverfolgbar und damit nicht abstreitbar und können somit zuverlässig nachgewiesen werden. Weiterhin ist vorteilhaft, dass ein Benutzer den gesamten Ablauf der Außerbetriebnahme mittels des Leitsystems durch den abgespeicherten Datensatz zu beliebigen Zeitpunkten verfolgen und auch beliebig rückverfolgen kann.

Die Speicher-Einheit ist insbesondere ein Geräteinventar (engl. "Inventory").

Gemäß einer weiteren Ausführungsform weist das Leitsystem eine Benutzereingabeeinrichtung auf, die dazu eingerichtet ist, zumindest eine Benutzereingabe zu empfangen und auf Basis der Benutzereingabe Daten zu verarbeiten, wobei die Benutzereingabeeinrichtung zum Austauschen von Daten zumindest mit der Speicher-Einheit und der Anzeige verbunden ist.

Die Benutzereingabeeinrichtung ist hierbei dazu eingerichtet, zumindest eine Benutzereingabe, beispielsweise eine Tastatureingabe, eine Eingabe über eine Computermaus und/oder eine Eingabe über einen Touchscreen, zu empfangen. Die Benutzereingabe kann zumindest als eine Benutzereingabe zum Auswählen zumindest einer außer zu Betrieb nehmenden Anlagenkomponente aus der Mehrzahl von Anlagenkomponenten, zum Auslösen der Außerbetriebnahme der zumindest einen ausgewählten Anlagenkomponente, zum Auslösen des automatischen Auswählens der Anzahl N1 von zu revozierenden spezifischen Zertifikaten, zum Auslösen des automatischen Revozierens der Anzahl N1 von ausgewählten Zertifikaten und/oder zum Auslösen des automatischen Löschens der Anzahl N2 von revozierten Zertifikaten ausgebildet sein.

Das Leitsystem ist insbesondere dazu eingerichtet, alle im Kontext einer vorherigen Provisionierung (Bereitstellung) der außer zu Betrieb nehmenden Anlagenkomponente ausgestellten Zertifikate, insbesondere über eine Zertifizierungsstelle des Leitsystems ausgestellten Zertifikate, im Geräteinventar abzuspeichern. Ferner ist das Leitsystem vorzugsweise dazu eingerichtet, bei jeder Aktualisierung der von der ausgewählten Anlagenkomponente verwendeten komponentenspezifischen und/oder anlagenspezifischen Zertifikate, z.B. aufgrund der aus Sicherheitsgründen in regelmäßigen Zeitabständen durchzuführenden Aktualisierung der zu den verwendeten Zertifikaten zugehörigen kryptographischen Schlüssel, die aktualisierten verwendeten Zertifikate ebenfalls im Geräteinventar abzuspeichern.

Gemäß einer weiteren Ausführungsform ist die Revokations-Einheit zum Revozieren der Anzahl N1 von ausgewählten Zertifikaten dazu eingerichtet, ein jeweiliges ausgewähltes Zertifikat der Anzahl N1 von ausgewählten Zertifikaten zu einer Zertifikatssperrliste zum Erhalten der Anzahl N2 von revozierten Zertifikaten hinzuzufügen.

Die Zertifikatssperrliste wird auch als "Certificate Revocation List (CRL)" bezeichnet.

Ein Erkennen einer erfolgreichen Revokation der Anzahl N1 von zu revozierenden Zertifikaten wird insbesondere protokollabhängig oder protokollunabhängig durchgeführt. Bei einer protokollabhängigen Durchführung, beispielsweise mittels eines sog. Zertifikats-Verwaltungsprotokolls (engl. "Certificate Management Protocol (CMP)"), wird die erfolgreiche Revokation beispielsweise anhand der entsprechenden Revokationsanfragen erkannt. Bei einer protokollunabhängigen Durchführung wird eine erfolgreiche Revokation mittels der Zertifikatssperrliste, die alle gerade revozierten Zertifikate der Anzahl N2 beinhaltet, nachgewiesen oder erkannt.

Ein revoziertes Zertifikat ist noch physisch in der ausgewählten Anlagenkomponente vorhanden. Sofern ein zu revozierendes spezifisches Zertifikat auf mehreren Anlagenkomponenten gespeichert oder hierauf referenziert ist, ist es ausreichend, wenn das zu revozierende spezifische Zertifikat ein einziges Mal revoziert wird. Anschließend ist es für jede der mehreren Anlagenkomponenten ungültig, muss jedoch in jeder der mehreren Anlagenkomponenten separat mittels der Lösch-Einheit gelöscht werden.

Die Revokations-Einheit oder eine Registrierungsstelle des Leitsystems ist vorzugsweise dazu eingerichtet, eine jeweilige Revokationsanfrage betreffend das jeweilige ausgewählte Zertifikat der Anzahl N1 von ausgewählten Zertifikaten zu generieren und an die Zertifizierungsstelle zu übertragen. Zudem kann die Revokations-Einheit dazu eingerichtet sein, die jeweilige Revokationsanfrage über die Registrierungsstelle an die Zertifizierungsstelle zu übertragen. Auch kann die jeweilige ausgewählte Anlagenkomponente, insbesondere durch eine Ansteuerung durch die Revokations-Einheit, dazu eingerichtet sein, eine Revokationsanfrage zu generieren und direkt an die Zertifizierungsstelle oder über die Registrierungsstelle an die Zertifizierungsstelle zu übertragen. Die Zertifizierungsstelle ist dann vorzugsweise dazu eingerichtet, das in der Revokationsanfrage betreffende jeweilige Zertifikat der Anzahl N1 von ausgewählten Zertifikaten zu der Zertifikatssperrliste hinzuzufügen und anschließend dies der Revokations-Einheit mitzuteilen, wodurch die Anzahl N2 von revozierten Zertifikaten erhalten wird.

Eine Registrierungsstelle (engl. "Registration Authority (RA)") ist insbesondere Teil einer PKI. Die Registrierungsstelle ist eine Autorität in einem Netzwerk, beispielsweise aus technischer Anlage und Leitsystem, die einen Antrag, beispielsweise von einem Leitsystem, einer Anlagenkomponente oder einem Benutzer, für ein digitales Zertifikat verifiziert und der Zertifizierungsstelle (engl. "Certificate Authority (CA)") mitteilt, dieses auszustellen.

Gemäß einer weiteren Ausführungsform weist die Speicher-Einheit einen manipulationsgeschützten Speicherbereich auf, in welchem zumindest der abgespeicherte Datensatz und die Zertifikatssperrliste geschützt abgespeichert sind.

Der manipulationsgeschützte Speicherbereich ist insbesondere in Form eines Hardware-Sicherheitsmoduls (engl. "Hardware Secure Module (HSM)"), beispielsweise mittels eines "Trusted Platform Module (TPM)", ausgebildet. Ein manipulationsgeschützter Speicherbereich ist gegen unberechtigte Zugriffe durch entsprechende Schutzmechanismen abgesichert.

Gemäß einer weiteren Ausführungsform weist das Löschen der Anzahl N2 von revozierten Zertifikaten ein physisches Löschen der Anzahl N2 von revozierten Zertifikaten aus einem Zertifikatsspeicher der zumindest einen ausgewählten Anlagenkomponente und ein physisches Löschen zumindest eines zu dem jeweiligen revozierten Zertifikat aus der Anzahl N2 zugeordneten geheimen Schlüssels aus dem Zertifikatsspeicher auf.

Diese Ausführungsform hat den Vorteil, welcher bereits unter dem ersten Aspekt beschrieben wurde, dass die mit dem Zurücksetzen der Anlagenkomponente auf Werkseinstellungen verbundene Fehleranfälligkeit eliminiert wird und zudem sichergestellt wird, dass ausschließlich die zu revozierenden Zertifikate gelöscht werden und dadurch in vorteilhafter Weise verhindert wird, dass weiterhin benötigte Zertifikate gelöscht werden.

Beim physischen Löschen, auch als sicheres Löschen bezeichnet, wird der Speicherplatz von bestimmten Daten, insbesondere die Anzahl N2 von revozierten Zertifikaten samt deren zugehörigen geheimen Schlüsseln, ein oder mehrmals mit bestimmten Bitkombinationen überschrieben. Somit können die bestimmten Daten in vorteilhafter Weise nicht mehr oder nur noch mit einem erheblichen technischen Aufwand wiederhergestellt werden.

Ein gelöschtes revoziertes Zertifikat und dessen zugeordneter gelöschter geheimer Schlüssel sind physisch nicht mehr in dem Zertifikatsspeicher der ausgewählten Anlagenkomponente vorhanden, da diese überschrieben wurden.

Das physische Löschen der Anzahl N2 von revozierten Zertifikaten weist ferner ein physisches Löschen der Anzahl N2 von revozierten Zertifikaten samt den zugehörigen revozierten Zertifikaten der zumindest einen Zertifizierungsstelle, die in den zugehörigen Zertifikatsketten enthalten sind, auf. Eine "Zertifikatskette" oder eine "Vertrauenskette" (engl. "Chain of Trust") ist ein bekannter Begriff im Kontext einer PKI. Die Zertifikatskette ist eine Liste aller Zertifikate, die zumindest für die Authentifizierung einer Entität, wie einer ausgewählten Anlagenkomponente, verwendet werden.

Ein geheimer Schlüssel ist im Kontext von PKI und asymmetrischen Verschlüsslungssystemen ein privater Schlüssel (engl. "Private Key").

Gemäß einer weiteren Ausführungsform ist die erste Selektions-Einheit, die Auslöse-Einheit, die zweite Selektions-Einheit, die Revokations-Einheit, die Lösch-Einheit und/oder die Speicher-Einheit des Leitsystems jeweils als eine Anwendung, insbesondere als ein Service oder als ein Mikroservice, ausgebildet.

Die Ausbildung zumindest einer der obigen in dieser Ausführungsform beschriebenen jeweiligen Einheiten als eine Anwendung hat den Vorteil, dass sich die Skalierbarkeit oder Erweiterbarkeit des Leitsystems und dessen jeweiliger Einheiten verbessert, da sich die Größe des Leitsystems mittels Mikroservices flexibel ändern lässt, ohne die Bereitstellung von Services zu beeinträchtigen. Mit anderen Worten können die jeweiligen Einheiten des Leitsystems als dedizierte Services oder Mikroservices sowohl einzeln zur Erweiterung des Leitsystems und/oder der technischen Anlage als auch gemeinsam im Kontext eines Software-Ökosystems bereitgestellt werden und dadurch an das gesamte Zertifikatsmanagement des Leitsystems besser angepasst werden.

Mikroservices sind Architekturmuster der Informationstechnik, bei denen komplexe Anwendungen aus unabhängigen Prozessen generiert werden, die untereinander mit sprachunabhängigen Programmierschnittstellen, wie beispielsweise APIs (engl. Application Programming Interface), kommunizieren können.

Mikroservices ermöglichen einen modularen Aufbau von Anwendungen und haben den Vorteil, dass jeder Mikroservice unabhängig entwickelt und bereitgestellt werden kann, ohne dass dies Auswirkungen auf andere Mikroservices hat.

Die Anwendung kann auch als eine in einem Container eingebettete Anwendung ausgebildet sein. Der Container ist insbesondere ein Software-Container, welcher in einer Ausführungsumgebung angeordnet ist, und in welchem eine jeweilige Anwendung ausführbar ist, und welcher von anderen Containern getrennt ist. In einem Container können auch als Mikroservices ausgebildete Anwendungen oder mehrere Teile einer Anwendung auf derselben Hardware unabhängig voneinander ausgeführt werden. Auch kann eine Gruppe von Anwendungen auf unterschiedlichen einzelnen Containern ausgeführt werden.

Die jeweilige Einheit, zum Beispiel die erste Selektions-Einheit oder die Auslöse-Einheit, kann aber auch hardwaretechnisch oder aus einer Kombination von hardwaretechnischen und/oder auch softwaretechnischen Elementen implementiert sein. Bei einer hardwaretechnischen Implementierung kann die jeweilige Einheit als Vorrichtung oder als Teil einer Vorrichtung, zum Beispiel als Computer oder als Mikroprozessor, ausgebildet sein. Bei einer softwaretechnischen Implementierung kann die jeweilige Einheit als Computerprogrammprodukt, als eine Funktion, als eine Routine, als Teil eines Programmcodes, als die Anwendung oder als ausführbares Objekt ausgebildet sein.

Gemäß einer weiteren Ausführungsform ist zumindest das Zertifikat der zumindest einen ausgewählten Anlagenkomponente als ein digitales Zertifikat, insbesondere als ein Public-Key-Zertifikat, ausgebildet, wobei der Zertifikatstyp des Zertifikats herstellerspezifisch, komponentenspezifisch oder applikationsspezifisch ausgebildet.

Ein digitales Zertifikat ist ein digitaler Datensatz nach dem X.509-Standard (RFC 5280) der "ITU Telecommunication Standardization Sector (ITU-T)" oder aber nach einem Standard der "Internet Engineering Task Force (IETF)", der bestimmte Eigenschaften von Personen oder Objekten (in diesem Fall von Anlagenkomponenten, Maschinen, Geräten, Applikationen und dergleichen) bestätigt und dessen Authentizität und Integrität durch kryptografische Verfahren geprüft werden kann. Das digitale Zertifikat enthält insbesondere die zu seiner Prüfung erforderlichen Daten. Das digitale Zertifikat wird durch die Zertifizierungsstelle ausgestellt.

Gemäß einer weiteren Ausführungsform ist die zweite Selektions-Einheit zum Auswählen dazu eingerichtet, die Anzahl N1 von zu revozierenden spezifischen Zertifikaten in Abhängigkeit von zumindest dem Zertifikatstyp des Zertifikats zu gruppieren.

Diese Ausführungsform weist den Vorteil auf, dass die gleichzeitige Revokation von mehreren zu revozierenden Zertifikaten der Anzahl N1 eines gleichen Zertifikatstyps durch das Gruppieren einfacher gestaltet werden kann und sich dadurch die Fehleranfälligkeit verringert.

Gemäß einer weiteren Ausführungsform weist der abspeicherte Datensatz zumindest einen bestimmten Status der außer Betrieb genommenen Anlagenkomponente, einen bestimmten Status der revozierten Zertifikate und/oder einen jeweiligen Zeitstempel des bestimmten Status auf.

Die Anzeige ist dazu eingerichtet, den abgespeicherten Datensatz, beispielsweise für einen Benutzer der technischen Anlage oder des Leitsystems, anzuzeigen.

Die Anzeige kann auch dazu eingerichtet sein, nur gefilterte Informationen hinsichtlich der Anlagenkomponenten, der technischen Anlage und/oder des Leitsystems anzuzeigen. Ein Beispiel für eine gefilterte Information ist ein Anzeigen aller Anlagenkomponenten, welche einen bestimmten Status, wie "außer Betrieb genommen", aufweisen. Das gefilterte Anzeigen ist vorteilhaft, da dadurch für den Benutzer sichergestellt werden kann, dass die Revokation, das Löschen und/oder die Außerbetriebnahme der ausgewählten Zertifikate und/oder der Anlagenkomponente erfolgreich abgeschlossen wurde.

Die Anzeige ist dazu eingerichtet, in Abhängigkeit des abgespeicherten Datensatzes und der Speicher-Einheit, zumindest eine Komponentenansicht und eine komponentenspezifische Detailansicht anzuzeigen. Die Komponentenansicht und die komponentenspezifische Detailansicht weisen jeweils mehrere Tabellen auf, wobei die mehreren Tabellen unterschiedliche Buttons, also grafische Schaltflächen, aufweisen, welche mittels einer von der Benutzereingabeeinrichtung von einem Benutzer empfangenen Eingabe angeklickt, markiert oder ausgewählt werden können. Die Komponentenansicht und die komponentenspezifische Detailansicht geben insbesondere unterschiedliche Informationen zu Anlagenkomponenten, zu der technischen Anlage und/oder zu dem Leitsystem in den mehreren Tabellen an.

Die Komponentenansicht ist insbesondere in mehrere Spalten und Zeilen unterteilt, wobei die mehreren Spalten beispielsweise folgende Informationen aufweisen: Informationen über den Namen, den Hersteller, die Gerätenummer (Geräte-ID), das IDevID-Zertifikat und/oder den Originalitätsnachweis der jeweiligen Anlagenkomponente.

Die Benutzereingabeeinrichtung ist dazu eingerichtet, eine Eingabe hinsichtlich eines Anklickens eines Namen einer Anlagenkomponente zu empfangen, wodurch eine komponentenspezifische Detailansicht in der Anzeige geöffnet und auf der Anzeige angezeigt wird.

In der angezeigten komponentenspezifischen Detailansicht ist zumindest eine Tabelle mit mehreren Spalten und Zeilen dargestellt. Die mehreren Spalten weisen zumindest eine erste Zustandspalte auf, welche anzeigt, ob ein jeweiliges komponentenspezifisches und/oder applikationsspezifisches Zertifikat revoziert oder nicht revoziert ist. Der bestimmte Status dieser Zertifikate wird beispielsweise als "revoziert" oder "nicht revoziert" bezeichnet. Die Revokations-Einheit ist insbesondere dazu eingerichtet, nach der Revokation der Anzahl N1 von ausgewählten Zertifikaten, einem jeden dieser dann revozierten Zertifikate den bestimmten Status "revoziert" zuzuweisen. Hierbei ist die Anzeige dazu eingerichtet, zumindest den bestimmten Status "revoziert" oder den bestimmten Status "nicht revoziert" in der ersten Zustandsspalte anzuzeigen. Darüber hinaus ist die Benutzereingabeeinrichtung insbesondere dazu eingerichtet, eine Eingabe durch den Benutzer zum Auslösen einer Revokation des zumindest einen zu revozierenden Zertifikats durch die Revokations-Einheit durch Anklicken des zumindest einen zu revozierenden Zertifikats in der ersten Zustandsspalte auszulösen. Weiterhin ist die Benutzereingabeeinrichtung vorzugsweise dazu eingerichtet, eine Eingabe zum Auslösen eines Löschvorgangs der Anzahl N2 von revozierten Zertifikaten durch die Lösch-Einheit durch Anklicken eines Löschbuttons in der komponentenspezifischen Detailansicht durch den Benutzer zu empfangen.

Die Komponentenansicht kann vorteilhafterweise um weitere Spalten erweitert werden, nämlich zumindest eine Zeitstempel-Spalte, eine Auswahlspalte und eine zweite Zustandsspalte.

Die Auswahlspalte weist vorzugsweise unterschiedliche Buttons auf, welche jeweils einer jeweiligen Anlagenkomponente zugeordnet sind und welche mittels einer von der Benutzereingabeeinrichtung von einem Benutzer empfangenen Eingabe markiert werden können. Sofern ein Button markiert ist, ist die dazugehörige Anlagenkomponente ausgewählt, was dementsprechend in der Auswahlspalte der Komponentenansicht angezeigt wird.

Ferner weist die Komponentenansicht einen Auslösebutton zum Auslösen einer Außerbetriebnahme der ausgewählten Anlagenkomponente auf. Somit ist die Benutzereingabeeinrichtung insbesondere dazu eingerichtet, eine Eingabe zum Auslösen einer Außerbetriebnahme der ausgewählten Anlagenkomponente durch Anklicken des Auslösebuttons durch den Benutzer zu empfangen.

Die zweite Zustandsspalte zeigt an, welche Anlagenkomponenten den bestimmten Zustand "außer Betrieb genommen (deprovisioniert) / archiviert" und "nicht außer Betrieb genommen (provisioniert)" aufweisen. Der bestimmte Status "außer Betrieb genommen (deprovisioniert) / archiviert" tritt dann auf, wenn die ausgewählte Anlagenkomponente erfolgreich außer Betrieb genommen und der bezeichnende Datensatz abgespeichert oder archiviert wurde.

Die Zeitstempel-Spalte gibt insbesondere den Zeitpunkt eines Auftretens des jeweiligen bestimmten Status an, beispielsweise wenn eine Anlagenkomponente erfolgreich außer Betrieb genommen wurde, oder aber auch den Zeitpunkt, wenn eine Anlagenkomponente den Originalitätsnachweis erbracht hat.

Insgesamt ist die Anzeige in Kombination mit dem abgespeicherten Datensatz der Speicher-Einheit dazu eingerichtet, zumindest den bestimmten Status der einzelnen Teilschritte der Außerbetriebnahme der ausgewählten Anlagenkomponente, wie die ausgewählte Anzahl N1 von zu revozierenden Zertifikaten, die Anzahl N2 von revozierten Zertifikaten und die gelöschten Zertifikate sowie den bestimmten Status der ausgewählten Anlagenkomponente (deprovisioniert oder provisioniert) fortlaufend und aktuell, beispielweise für den Benutzer, anzuzeigen. Dies hat den Vorteil, dass der Benutzer durch diese Visualisierung jederzeit sicherstellen, nachvollziehen und feststellen kann, welche ausgewählten Zertifikate revoziert und gelöscht wurden und welche der Anlagenkomponenten außer Betrieb genommen wurden. Mit anderen Worten wird dem Benutzer durch die Anzeige jederzeit ermöglicht, festzustellen, welche Anlagenkomponenten des Leitsystems und welche Zertifikate sich in welchem bestimmten Zustand befinden.

Gemäß einer weiteren Ausführungsform weist das Leitsystem eine Steuereinrichtung auf, die dazu eingerichtet ist, zumindest die erste Selektions-Einheit, die Auslöse-Einheit, die zweite Selektions-Einheit, die Revokations-Einheit, die Lösch-Einheit und/oder die Speicher-Einheit des Leitsystems anzusteuern.

Mittels der Steuereinrichtung wird in vorteilhafter Weise ein automatisierter Ablauf zur Außerbetriebnahme der zumindest einen ausgewählten Anlagenkomponente in dem Leitsystem durchgeführt.

Hierbei ist die Steuereinrichtung dazu eingerichtet, die jeweiligen Einheiten des Leitsystems derart anzusteuern, dass ein Auswählen mittels der ersten Selektions-Einheit und eine darauffolgende Außerbetriebnahme mittels der Auslöse-Einheit und dessen Untereinheiten vollautomatisch ohne Eingreifen eines (menschlichen) Benutzers durchgeführt werden.

In einer Ausführungsform ist das Leitsystem insbesondere als ein Cluster ausgebildet, auf welchem die jeweiligen Einheiten des Leitsystems als eine jeweilige in einem Container eingebettete Anwendung in einer jeweiligen Ausführungsumgebung ausgebildet sind und dort insbesondere mittels der Steuereinrichtung gesteuert und ausgeführt werden. Dies hat den Vorteil, dass die jeweiligen Einheiten auf verschiedenen Anlagenkomponenten des Leitsystems oder in der Cloud separat ausgeführt werden können und zudem insbesondere auch nicht an die verschiedenen Anlagenkomponenten gebunden sind. Ein Cluster oder ein Software-Cluster oder auch Rechnerverbund bezeichnet eine Anzahl von vernetzten Software-Anwendungen und/oder deren zugehörigen Computern.

Gemäß einer weiteren Ausführungsform ist die Steuereinrichtung dazu eingerichtet, die erste Selektions-Einheit derart anzusteuern, dass die erste Selektions-Einheit eine Mehrzahl von außer zu Betrieb nehmenden Anlagenkomponenten aus der Mehrzahl von Anlagenkomponenten auswählt, und die Auslöse-Einheit derart anzusteuern, dass die Auslöse-Einheit eine Mehrzahl von Außerbetriebnahmen der Mehrzahl von ausgewählten Anlagenkomponenten auslöst, wobei die Steuereinrichtung dazu eingerichtet ist, die erste Selektions-Einheit und die Auslöse-Einheit zum Auswählen der Mehrzahl von außer zu Betrieb nehmenden Anlagenkomponenten und zum Auslösen der Mehrzahl von Außerbetriebnahmen gleichzeitig anzusteuern.

Diese Ausführungsform weist den Vorteil auf, dass die Steuereinrichtung dazu eingerichtet ist, derart die erste Selektions-Einheit und die Auslöse-Einheit anzusteuern, dass eine gleichzeitige (parallele) und automatisierte Außerbetriebnahme einer Mehrzahl von ausgewählten Anlagenkomponenten durchgeführt wird.

Gemäß einer weiteren Ausführungsform ist zumindest eine Anlagenkomponente der Mehrzahl von Anlagenkomponenten als eine Maschine, wie eine Werkzeugmaschine oder ein Roboter, als ein Feldgerät, beispielsweise ein Edge-Device, eine speicherprogrammierbare Steuerung, ein Sensor oder ein Aktor und/oder als eine Netzwerkkomponente, wie ein Netzwerk-Switch, eine Firewall-Komponente oder ein Industrial-PC, ausgebildet.

Bei einer Anlagenkomponente kann es sich ferner um einzelne Messumformer für Sensoren oder Steuergeräte für Aktoren der technischen Anlage handeln. Eine Anlagenkomponente kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät, ein Operator Station Server oder eine dezentrale Periphere sind ebenfalls unter dem Begriff "Anlagenkomponente" zu fassen. Ein Automatisierungsgerät ist dabei ein technisches Gerät, das zur Realisierung einer Automatisierung benutzt wird. Es kann sich dabei beispielsweise um eine speicherprogrammierbare Steuerung (Feldgerät) handeln, die eine übergeordnete Steuerungsfunktion für untergeordnete Steuerungen darstellt. Die Anlagenkomponente kann ferner als eine lokale Datenverarbeitungseinheit (engl. "Local-Data-Processing Engine") eines industriellen IoT-Geräts (engl. "Internet-of-Things") ausgebildet sein. Zudem kann die Steuereinrichtung dazu eingerichtet sein, zumindest eine Anlagenkomponente der Mehrzahl von Anlagenkomponenten anzusteuern.

Gemäß einem zweiten Aspekt wird ein computer-implementiertes Verfahren zur Außerbetriebnahme zumindest einer Anlagenkomponente aus einer Mehrzahl von Anlagenkomponenten eines Leitsystems für eine technische Anlage, insbesondere eine Automatisierungsanlage, vorgeschlagen. Das Verfahren weist die Schritte auf:
a) Auswählen der zumindest einen Anlagenkomponente aus der Mehrzahl von Anlagenkomponenten des Leitsystems, und
b) Auslösen einer Außerbetriebnahme der zumindest einen ausgewählten Anlagenkomponente, wobei der Schritt b) ferner aufweist:
   b1) Auswählen, aus allen Zertifikaten der zumindest einen ausgewählten Anlagenkomponente, ausschließlich einer Anzahl N1 von zu revozierenden spezifischen Zertifikaten, wobei ein Zertifikat der zumindest einen ausgewählten Anlagenkomponente als ein zu revozierendes spezifisches Zertifikat in Abhängigkeit von zumindest einem Benutzerparameter des Zertifikats, zumindest einem Anlagenparameter des Zertifikats und/oder zumindest einem Zertifikatstyp des Zertifikats festgelegt wird, mit N1 ≥ 1,
   b2) Revozieren der Anzahl N1 von ausgewählten Zertifikaten zum Erhalten einer Anzahl N2 von revozierten Zertifikaten, mit N1 = N2, und
   b3) Löschen der Anzahl N2 von revozierten Zertifikaten von der zumindest einen ausgewählten Anlagenkomponente zum Erhalten einer außer Betrieb genommenen Anlagenkomponente.

Die für das vorgeschlagene Leitsystem gemäß dem ersten Aspekt beschriebenen Ausführungsformen und Merkmale gelten für das vorgeschlagene computer-implementierte Verfahren gemäß dem zweiten Aspekt entsprechend.

Gemäß einer Ausführungsform weist das Verfahren ferner auf:
c) Abspeichern eines die außer Betrieb genommene Anlagenkomponente bezeichnenden Datensatzes in einer Speicher-Einheit, insbesondere einem Geräteinventar, des Leitsystems, und
Anzeigen des zumindest einen abgespeicherten Datensatzes.

Das Geräteinventar ist insbesondere computer-implementiert ausgebildet. Es kann als eine dedizierte Instanz in der technischen Anlage oder dem Leitsystem, oder als Teil der Registrierungsstelle der technischen Anlage oder des Leitsystems oder in einer Cloud, welche mit der technischen Anlage verbunden ist oder welche mit dem Leitsystem verbunden sein kann, ausgebildet sein. Die Daten der Anlagenkomponenten können entweder direkt im Geräteinventar enthalten sein oder aus dem Geräteinventar heraus referenziert werden.

Gemäß einer weiteren Ausführungsform weist der Schritt a) ferner auf:
Auswählen einer Mehrzahl von außer zu Betrieb nehmenden Anlagenkomponenten aus der Mehrzahl von Anlagenkomponenten des Leitsystems, wobei der Schritt b) ferner aufweist:
Auslösen einer Mehrzahl von Außerbetriebnahmen der Mehrzahl von ausgewählten Anlagenkomponenten, wobei die Schritte a) und b) zum Auswählen der Mehrzahl von außer zu Betrieb nehmenden Anlagenkomponenten und zum Auslösen der Mehrzahl von Außerbetriebnahmen gleichzeitig durchgeführt werden.

Gemäß einem dritten Aspekt wird ein Computerprogrammprodukt vorgeschlagen, welches Befehle umfasst, die bei der Ausführung des Programms durch einen Computer diesen veranlassen, das Verfahren gemäß dem zweiten Aspekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten

Figuren näher erläutert.
- Fig. 1: zeigt ein schematisches Blockdiagramm eines Ausführungsbeispiels eines Leitsystems für eine technische Anlage; und
- Fig. 2: zeigt ein schematisches Ablaufdiagramm eines Verfahrens zur Außerbetriebnahme einer Anlagenkomponente.

In den Figuren sind gleiche oder funktionsgleiche Elemente mit denselben Bezugszeichen versehen worden, sofern nichts anderes angegeben ist.

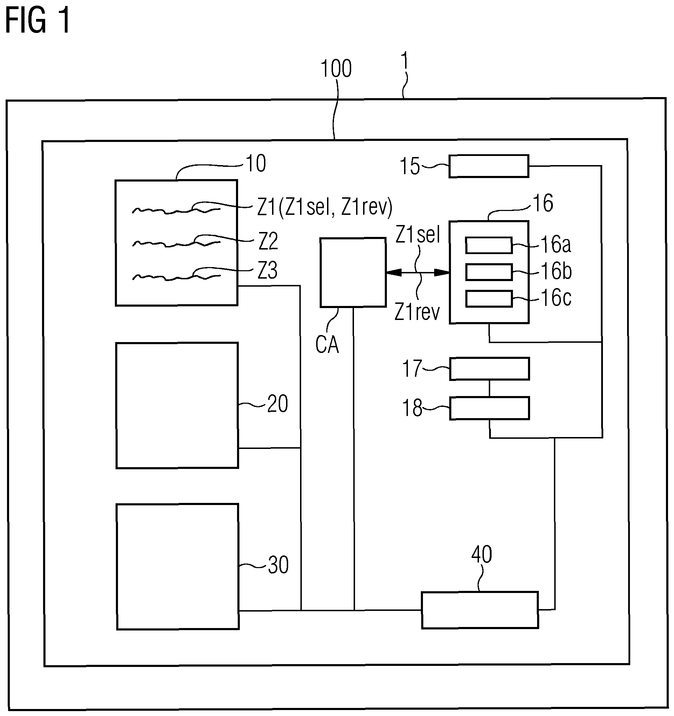

Fig. 1 zeigt ein schematisches Blockdiagramm eines Ausführungsbeispiels eines Leitsystems 100 für eine technische Anlage 1, wie eine Automatisierungsanlage. Die technische Anlage 1 weist in der Fig. 1 das Leitsystem 100 auf. Wie in Fig. 1 dargestellt, weist das Leitsystem 100 eine Mehrzahl von Anlagenkomponenten 10, 20, 30 auf. Eine Anlagenkomponente 10, 20, 30 ist in der Fig. 1 als ein Feldgerät ausgebildet. Alternativ kann die Anlagenkomponente 10, 20, 30 als eine Netzwerkkomponente, wie ein Netzwerk-Switch, eine Firewall-Komponente oder ein Industrial-PC, ausgebildet sein.

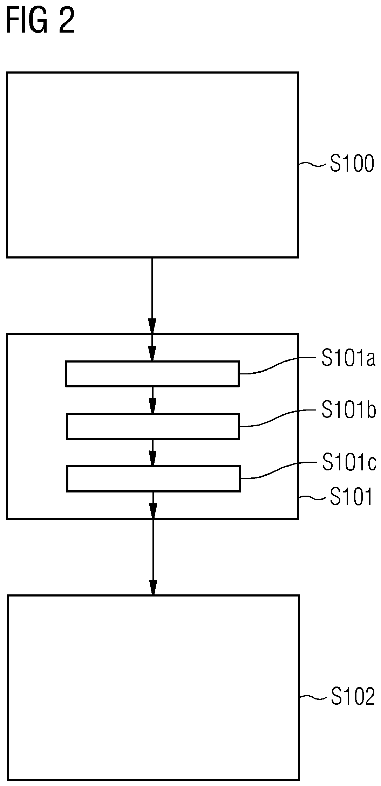

Darüber hinaus sind Verweise auf die Verfahrensschritte S100 bis S102 von Fig. 2, die ein schematisches Ablaufdiagramm eines Ausführungsbeispiels eines Verfahrens zur Außerbetriebnahme einer Anlagenkomponente zeigt, in den folgenden Erläuterungen zu Fig. 1 in Klammern mit angegeben.

Das Leitsystem 100 weist in Fig. 1 eine erste Selektions-Einheit 15, eine Auslöse-Einheit 16, eine Speicher-Einheit 17, eine Anzeige 18 und eine Steuereinrichtung 40 auf. Die Auslöse-Einheit 16 weist eine zweite Selektions-Einheit 16a, eine Revokations-Einheit 16b und eine Lösch-Einheit 16c auf. In der Fig. 1 sind die Anlagenkomponenten 10, 20, 30 mit der Steuereinrichtung 40 zum Übertragen von Daten verbunden.

Die erste Selektions-Einheit 15 ist zum Auswählen zumindest einer außer zu Betrieb nehmenden Anlagenkomponente 10 aus der Mehrzahl von Anlagenkomponenten 10, 20, 30 eingerichtet (siehe Schritt S100 der Fig. 2). Weiterhin ist die Auslöse-Einheit 16 zum Auslösen einer Außerbetriebnahme der zumindest einen ausgewählten Anlagenkomponente 10 eingerichtet (siehe Schritt S101 der Fig. 2).

Dann ist die zweite Selektions-Einheit 16a zum Auswählen, aus allen Zertifikaten Z1, Z2, Z3 der zumindest einen ausgewählten Anlagenkomponente 10, ausschließlich einer Anzahl N1 von zu revozierenden spezifischen Zertifikaten Zlsel eingerichtet, mit N1 ≥ 1 (siehe Schritt S101a der Fig. 2). Hierzu ist die zweite Selektions-Einheit 16a dazu eingerichtet, ein Zertifikat Z1 der zumindest einen ausgewählten Anlagenkomponente 10 als ein zu revozierendes spezifisches Zertifikat Zlsel in Abhängigkeit von zumindest einem Benutzerparameter des Zertifikats Z1, zumindest einem Anlagenparameter des Zertifikats Z1 und/oder zumindest einem Zertifikatstyp des Zertifikats Z1 festzulegen.

Das Zertifikat Z1, Z2, Z3 ist als ein digitales Zertifikat, insbesondere als ein Public-Key-Zertifikat, ausgebildet. Der Zertifikatstyp des Zertifikats Z1, Z2, Z3 ist dabei herstellerspezifisch, komponentenspezifisch oder applikationsspezifisch ausgebildet.

Die zweite Selektions-Einheit 16a ist zudem zum Auswählen dazu eingerichtet, die Anzahl N1 von zu revozierenden spezifischen Zertifikaten Zlsel in Abhängigkeit von zumindest dem Zertifikatstyp des Zertifikats Z1 zu gruppieren.

Anschließend ist die Revokations-Einheit 16b zum Revozieren der Anzahl N1 von ausgewählten Zertifikaten Zlsel zum Erhalten einer Anzahl N2 von revozierten Zertifikaten Z1rev, mit N1 = N2, eingerichtet (siehe Schritt S101b der Fig. 2). Dabei ist die Revokations-Einheit 16b zum Revozieren der Anzahl N1 von ausgewählten Zertifikaten Zlsel dazu eingerichtet, ein jeweiliges ausgewähltes Zertifikat Zlsel der Anzahl N1 von ausgewählten Zertifikaten Zlsel zu einer Zertifikatssperrliste zum Erhalten der Anzahl N2 von revozierten Zertifikaten Zlrev hinzuzufügen.

Darüber hinaus ist die Lösch-Einheit 16c zum Löschen der Anzahl N2 von revozierten Zertifikaten Zlrev von der zumindest einen ausgewählten Anlagenkomponente 10 zum Erhalten einer außer Betrieb genommenen Anlagenkomponente 10 eingerichtet (siehe Schritt S101c der Fig. 2). Das Löschen der Anzahl N2 von revozierten Zertifikaten Zlrev weist ein physisches Löschen der Anzahl N2 von revozierten Zertifikaten Zlrev aus einem Zertifikatsspeicher der zumindest einen ausgewählten Anlagenkomponente 10 und ein physisches Löschen zumindest eines zu dem jeweiligen revozierten Zertifikat Zlrev aus der Anzahl N2 zugeordneten geheimen Schlüssels aus dem Zertifikatsspeicher auf.

Ferner ist die Speicher-Einheit 17 zum Abspeichern eines die außer Betrieb genommene Anlagenkomponente 10 bezeichnenden Datensatzes eingerichtet (siehe Schritt S102 der Fig. 2). Die Anzeige 18 ist mit der Speicher-Einheit 17 verbunden und ist dazu eingerichtet, zumindest den abgespeicherten Datensatz anzuzeigen. Die Speicher-Einheit 17 weist einen manipulationsgeschützten Speicherbereich (nicht dargestellt) auf, in welchem zumindest der abgespeicherte Datensatz und die Zertifikatssperrliste geschützt abgespeichert sind.

Der in der Speicher-Einheit 17 abspeicherte Datensatz weist einen bestimmten Status der außer Betrieb genommenen Anlagenkomponente 10, einen bestimmten Status der revozierten Zertifikate Zlrev und/oder einen jeweiligen Zeitstempel des bestimmten Status auf.

In der Fig. 1 sind die erste Selektions-Einheit 15, die Auslöse-Einheit 16, die zweite Selektions-Einheit 16a, die Revokations-Einheit 16b, die Lösch-Einheit 16c und/oder die Speicher-Einheit 17 des Leitsystems 100 jeweils als eine Anwendung, insbesondere als ein Mikroservice, ausgebildet.

Darüber hinaus ist die Steuereinrichtung 40 des Leitsystems 100 dazu eingerichtet, zumindest die erste Selektions-Einheit 15, die Auslöse-Einheit 16, die zweite Selektions-Einheit 16a, die Revokations-Einheit 16b, die Lösch-Einheit 16c, die Speicher-Einheit 17 und/oder die Anzeige 18 des Leitsystems 100 anzusteuern. Hierfür sind die Einheiten 15, 16, 16a - 16c, 17 und die Anzeige 18 zum Übertragen von Daten mit der Steuereinrichtung 40 verbunden.

Zudem ist die Steuereinrichtung 40 dazu eingerichtet, die erste Selektions-Einheit 15 derart anzusteuern, dass die erste Selektions-Einheit 15 eine Mehrzahl von außer zu Betrieb nehmenden Anlagenkomponenten 10, 20 aus der Mehrzahl von Anlagenkomponenten 10, 20, 30 auswählt, und die Auslöse-Einheit 16 derart anzusteuern, dass die Auslöse-Einheit 16 eine Mehrzahl von Außerbetriebnahmen der Mehrzahl von ausgewählten Anlagenkomponenten 10, 20 auslöst. Dabei ist die Steuereinrichtung 40 dazu eingerichtet, die erste Selektions-Einheit 15 und die Auslöse-Einheit 16 zum Auswählen der Mehrzahl von außer zu Betrieb nehmenden Anlagenkomponenten 10, 20 und zum Auslösen der Mehrzahl von Außerbetriebnahmen gleichzeitig anzusteuern.

Ferner weist Fig. 1 eine Zertifizierungsstelle CA auf, welche mit der Steuereinrichtung 40 zum Austauschen von Daten verbunden ist.

Die Zertifizierungsstelle CA ist insbesondere dazu eingerichtet, eine Revokationsanfrage zum Hinzufügen eines zu revozierenden ausgewählten Zertifikats Zlsel der Anzahl N1 von ausgewählten Zertifikaten Zlsel zu der Zertifikatssperrliste, welche insbesondere in der Speicher-Einheit abgespeichert ist, von der Revokations-Einheit zu empfangen. Anschließend ist Zertifizierungsstelle CA vorzugsweise dazu eingerichtet, im Zuge der Verarbeitung der Revokationsanfrage das zu revozierende ausgewählte Zertifikat Zlsel der Anzahl N1, vorzugsweise die Seriennummer dieses Zertifikats, zu der Zertifikatssperrliste hinzuzufügen. Sobald das ausgewählte Zertifikat Zlsel der Anzahl N1 zu der Zertifikatssperrliste hinzugefügt wurde, ist das ausgewählte Zertifikat Zlsel der Anzahl N1 revoziert, was anschließend der Revokations-Einheit zumindest durch die Zertifizierungsstelle CA oder die Steuereinrichtung 40 mitgeteilt wird. Damit wird ein revoziertes Zertifikat Zlrev einer Anzahl N2 von revozierten Zertifikaten Zlrev erhalten.

Fig. 2 zeigt ein Ablaufdiagramm, welches die Schritte des Verfahrens zur Außerbetriebnahme einer Anlagenkomponente 10, 20, 30 (siehe Fig. 1) gemäß eines Ausführungsbeispiels zeigt. Das Verfahren umfasst die Schritte S100 bis S102. Die jeweiligen Verfahrensschritte S100 bis S102 wurden bereits anhand von Fig. 1 erläutert, weshalb zur Vermeidung von Wiederholungen die Verfahrensschritte S100 bis S102 nicht nochmals beschrieben werden.

Obwohl die vorliegende Erfindung anhand von Ausführungsbeispielen beschrieben wurde, ist sie vielfältig modifizierbar.

### Bezugszeichenliste

- 1: technische Anlage
- 10: Anlagenkomponente
- 15: erste Selektions-Einheit
- 16: Auslöse-Einheit
- 16a: zweite Selektions-Einheit
- 16b: Revokations-Einheit
- 16c: Lösch-Einheit
- 17: Speicher-Einheit
- 18: Anzeige
- 20: Anlagenkomponente
- 30: Anlagenkomponente
- 40: Steuereinrichtung
- 100: Leitsystem

- CA: Zertifizierungsstelle
- S100: Verfahrensschritt
- S101: Verfahrensschritt
- S101a: Verfahrensschritt
- S101b: Verfahrensschritt
- S101c: Verfahrensschritt
- S102: Verfahrensschritt
- Z1: Zertifikat
- Z1sel: zu revozierendes Zertifikat
- Z1rev: revoziertes Zertifikat
- Z2: Zertifikat
- Z3: Zertifikat

## Patentansprüche

1. Leitsystem (100) für eine technische Anlage (1), insbesondere eine Automatisierungsanlage, welches eine Mehrzahl von Anlagenkomponenten (10, 20, 30) aufweist, wobei das Leitsystem (100) aufweist:
eine erste Selektions-Einheit (15) zum Auswählen zumindest einer außer zu Betrieb nehmenden Anlagenkomponente (10) aus der Mehrzahl von Anlagenkomponenten (10, 20, 30), und
eine Auslöse-Einheit (16) zum Auslösen einer Außerbetriebnahme der zumindest einen ausgewählten Anlagenkomponente (10), wobei die Auslöse-Einheit (16) aufweist:
eine zweite Selektions-Einheit (16a) zum Auswählen, aus allen Zertifikaten (Z1, Z2, Z3) der zumindest einen ausgewählten Anlagenkomponente (10), ausschließlich einer Anzahl N1 von zu revozierenden spezifischen Zertifikaten (Z1sel), wobei die zweite Selektions-Einheit (16a) dazu eingerichtet ist, ein Zertifikat (Z1) der zumindest einen ausgewählten Anlagenkomponente (10) als ein zu revozierendes spezifisches Zertifikat (Z1sel) in Abhängigkeit von zumindest einem Benutzerparameter des Zertifikats (Z1), zumindest einem Anlagenparameter des Zertifikats (Z1) und/oder zumindest einem Zertifikatstyp des Zertifikats (Z1) festzulegen, mit N1 ≥ 1,
eine Revokations-Einheit (16b) zum Revozieren der Anzahl N1 von ausgewählten Zertifikaten (Z1sel) zum Erhalten einer Anzahl N2 von revozierten Zertifikaten (Z1rev), mit N1 = N2, und
eine Lösch-Einheit (16c) zum Löschen der Anzahl N2 von revozierten Zertifikaten (Z1rev) von der zumindest einen ausgewählten Anlagenkomponente (10) zum Erhalten einer außer Betrieb genommenen Anlagenkomponente (10).

2. Leitsystem nach Anspruch 1,
**gekennzeichnet durch**:
eine Speicher-Einheit (17) zum Abspeichern eines die außer Betrieb genommenen Anlagenkomponente (10) bezeichnenden Datensatzes, und
eine Anzeige (18), welche mit der Speicher-Einheit (17) verbunden ist und dazu eingerichtet ist, zumindest den abgespeicherten Datensatz anzuzeigen.

3. Leitsystem nach Anspruch 2,
**dadurch gekennzeichnet,**
**dass** die Revokations-Einheit (16b) zum Revozieren der Anzahl N1 von ausgewählten Zertifikaten (Z1sel) dazu eingerichtet ist, ein jeweiliges ausgewähltes Zertifikat (Z1sel) der Anzahl N1 von ausgewählten Zertifikaten (Z1sel) zu einer Zertifikatssperrliste zum Erhalten der Anzahl N2 von revozierten Zertifikaten (Z1rev) hinzuzufügen.

4. Leitsystem nach Anspruch 3,
**dadurch gekennzeichnet,**
**dass** die Speicher-Einheit (17) einen manipulationsgeschützten Speicherbereich aufweist, in welchem zumindest der abgespeicherte Datensatz und die Zertifikatssperrliste geschützt abgespeichert sind.

5. Leitsystem nach einem der Ansprüche 1 - 4,
**dadurch gekennzeichnet,**
**dass** das Löschen der Anzahl N2 von revozierten Zertifikaten (Z1rev) ein physisches Löschen der Anzahl N2 von revozierten Zertifikaten (Z1rev) aus einem Zertifikatsspeicher der zumindest einen ausgewählten Anlagenkomponente (10) und ein physisches Löschen zumindest eines zu dem jeweiligen revozierten Zertifikat (Z1rev) aus der Anzahl N2 zugeordneten geheimen Schlüssels aus dem Zertifikatsspeicher aufweist.

6. Leitsystem nach einem der Ansprüche 2 - 5,
**dadurch gekennzeichnet,**
**dass** die erste Selektions-Einheit (15), die Auslöse-Einheit (16), die zweite Selektions-Einheit (16a), die Revokations-Einheit (16b), die Lösch-Einheit (16c) und/oder die Speicher-Einheit (17) des Leitsystems (100) jeweils als eine Anwendung, insbesondere als ein Service oder als ein Mikroservice, ausgebildet ist.

7. Leitsystem nach einem der Ansprüche 1 - 6,
**dadurch gekennzeichnet,**
**dass** zumindest das Zertifikat (Z1) der zumindest einen ausgewählten Anlagenkomponente (10) als ein digitales Zertifikat, insbesondere als ein Public-Key-Zertifikat, ausgebildet ist, wobei der Zertifikatstyp des Zertifikats (Z1) herstellerspezifisch, komponentenspezifisch oder applikationsspezifisch ausgebildet ist.

8. Leitsystem nach einem der Ansprüche 1 - 7,
**dadurch gekennzeichnet,**
**dass** die zweite Selektions-Einheit (16a) zum Auswählen dazu eingerichtet ist, die Anzahl N1 von zu revozierenden spezifischen Zertifikaten (Z1sel) in Abhängigkeit von zumindest dem Zertifikatstyp des Zertifikats (Z1) zu gruppieren.

9. Leitsystem nach einem der Ansprüche 2 - 8,
**dadurch gekennzeichnet,**
**dass** der abspeicherte Datensatz zumindest einen bestimmten Status der außer Betrieb genommenen Anlagenkomponente (10), einen bestimmten Status der revozierten Zertifikate (Z1rev) und/oder einen jeweiligen Zeitstempel des bestimmten Status aufweist.

10. Leitsystem nach einem der Ansprüche 2 - 9, **gekennzeichnet durch**:
eine Steuereinrichtung (40), die dazu eingerichtet ist, zumindest die erste Selektions-Einheit (15), die Auslöse-Einheit (16), die zweite Selektions-Einheit (16a), die Revokations-Einheit (16b), die Lösch-Einheit (16c) und/oder die Speicher-Einheit (17) des Leitsystems (100) anzusteuern.

11. Leitsystem nach Anspruch 10,
**dadurch gekennzeichnet,**
**dass** die Steuereinrichtung (40) dazu eingerichtet ist, die erste Selektions-Einheit (15) derart anzusteuern, dass die erste Selektions-Einheit (15) eine Mehrzahl von außer zu Betrieb nehmenden Anlagenkomponenten (10, 20) aus der Mehrzahl von Anlagenkomponenten (10, 20, 30) auswählt, und die Auslöse-Einheit (16) derart anzusteuern, dass die Auslöse-Einheit (16) eine Mehrzahl von Außerbetriebnahmen der Mehrzahl von ausgewählten Anlagenkomponenten (10, 20) auslöst, wobei die Steuereinrichtung (40) dazu eingerichtet ist, die erste Selektions-Einheit (15) und die Auslöse-Einheit (16) zum Auswählen der Mehrzahl von außer zu Betrieb nehmenden Anlagenkomponenten (10, 20) und zum Auslösen der Mehrzahl von Außerbetriebnahmen gleichzeitig anzusteuern.

12. Leitsystem nach einem der Ansprüche 1 - 11,
**dadurch gekennzeichnet,**
**dass** zumindest eine Anlagenkomponente (10) der Mehrzahl von Anlagenkomponenten (10, 20, 30) als eine Maschine, wie eine Werkzeugmaschine oder ein Roboter, als ein Feldgerät, beispielsweise ein Edge-Device, eine speicherprogrammierbare Steuerung, ein Sensor oder ein Aktor und/oder als eine Netzwerkkomponente, wie ein Netzwerk-Switch, eine Firewall-Komponente oder ein Industrial-PC, ausgebildet ist.

13. Computer-implementiertes Verfahren zur Außerbetriebnahme zumindest einer Anlagenkomponente (10) aus einer Mehrzahl von Anlagenkomponenten (10, 20, 30) eines Leitsystems (100) für eine technische Anlage (1), insbesondere eine Automatisierungsanlage, mit den Schritten:
a) Auswählen (S100) der zumindest einen Anlagenkomponente (10) aus der Mehrzahl von Anlagenkomponenten (10, 20, 30) des Leitsystems (100), und
b) Auslösen (S101) einer Außerbetriebnahme der zumindest einen ausgewählten Anlagenkomponente (10), wobei der Schritt b) (S101) ferner aufweist:
b1) Auswählen (S101a), aus allen Zertifikaten (Z1, Z2, Z3) der zumindest einen ausgewählten Anlagenkomponente (10), ausschließlich einer Anzahl N1 von zu revozierenden spezifischen Zertifikaten (Z1sel), wobei ein Zertifikat (Z1) der zumindest einen ausgewählten Anlagenkomponente (10) als ein zu revozierendes spezifisches Zertifikat (Z1sel) in Abhängigkeit von zumindest einem Benutzerparameter des Zertifikats (Z1), zumindest einem Anlagenparameter des Zertifikats (Z1) und/oder zumindest einem Zertifikatstyp des Zertifikats (Z1) festgelegt wird, mit N1 ≥ 1,
b2) Revozieren (S101b) der Anzahl N1 von ausgewählten Zertifikaten (Z1sel) zum Erhalten einer Anzahl N2 von revozierten Zertifikaten (Z1rev), mit N1 = N2, und
b3) Löschen (S101c) der Anzahl N2 von revozierten Zertifikaten (Z1rev) von der zumindest einen ausgewählten Anlagenkomponente (10) zum Erhalten einer außer Betrieb genommenen Anlagenkomponente (10).

14. Verfahren nach Anspruch 13,
**gekennzeichnet durch**:
c) Abspeichern (S102) eines die außer Betrieb genommene Anlagenkomponente (10) bezeichnenden Datensatzes in einer Speicher-Einheit (17), insbesondere einem Geräteinventar, des Leitsystems (100), und
Anzeigen des zumindest einen abgespeicherten Datensatzes.

15. Verfahren nach Anspruch 13 oder 14,
**dadurch gekennzeichnet,**
**dass** der Schritt a) (S100) ferner aufweist:
Auswählen einer Mehrzahl von außer zu Betrieb nehmenden Anlagenkomponenten (10, 20) aus der Mehrzahl von Anlagenkomponenten (10, 20, 30) des Leitsystems (100), wobei der Schritt b) (101) ferner aufweist:
Auslösen einer Mehrzahl von Außerbetriebnahmen der Mehrzahl von ausgewählten Anlagenkomponenten (10, 20), wobei die Schritte a) und b) (S100, S101) zum Auswählen der Mehrzahl von außer zu Betrieb nehmenden Anlagenkomponenten (10, 20) und zum Auslösen der Mehrzahl von Außerbetriebnahmen gleichzeitig durchgeführt werden.

16. Computerprogrammprodukt, umfassend Befehle, die bei der Ausführung des Programms durch einen Computer diesen veranlassen, das Verfahren nach einem der Ansprüche 13 - 15 auszuführen.
